# FASCICULE DE BREVET EUROPEEN

(11) **EP 3 648 990 B1**
(45) Date de publication et mention de la délivrance du brevet: **19.10.2022**
(21) Numéro de dépôt: 18752809.6
(22) Date de dépôt: 02.07.2018
(51) Int. Cl.: B60C 11/03

(54) **BANDE DE ROULEMENT DE PNEUMATIQUE POUR VEHICULE AGRICOLE**
LAUFFLÄCHE FÜR EINEN REIFEN EINES LANDWIRTSCHAFTLICHEN FAHRZEUGS
TREAD FOR AN AGRICULTURAL VEHICLE TYRE

(30) Priorité: 04.07.2017 FR 1756282
(43) Date de publication de la demande: 13.05.2020
(73) Titulaire: Compagnie Générale des Etablissements Michelin, 63000 Clermont-Ferrand (FR)
(72) Inventeur: GASC, Alexandre, 63040 Clermont-Ferrand Cedex 9 (FR); PERY, Vincent, 63040 Clermont-Ferrand Cedex 9 (FR); ROPARS, Olivier, 63040 Clermont-Ferrand Cedex 9 (FR)
(74) Mandataire: Millanvois, Patrick Jacques Jean
(86) Numéro de dépôt international: PCT/FR2018/051632
(87) Numéro de publication internationale: WO 2019/008257

(56) Documents cités:
- WO-A1-98/08697
- DE-C- 888 654
- JP-A- 2014 234 084
- JP-U- H01 122 306
- US-A- 4 131 148
- US-B1- 6 260 594

## Description

La présente invention a pour objet un pneumatique pour véhicule agricole, tel qu'un tracteur agricole ou un véhicule agro-industriel, et concerne plus particulièrement la bande de roulement d'un tel pneumatique.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole, et en particulier sa bande de roulement, doit présenter un compromis de performances entre, de façon non exhaustive, la traction en champ, la résistance aux arrachements, la résistance à l'usure sur route, la résistance à l'avancement, le confort vibratoire sur route.

Pour satisfaire cet ensemble de performances, la bande de roulement d'un pneumatique pour véhicule agricole comprend généralement une pluralité de barrettes, éléments en relief s'étendant radialement à partir d'une surface de fond jusqu'à la surface de roulement.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend vers l'extérieur à partir de la surface de fond jusqu'à la surface de roulement. La face radialement extérieure de la barrette, appartenant à la surface de roulement et destinée à entrer en contact avec le sol lors du passage de la barrette dans la surface de contact du pneumatique avec le sol, est appelée face de contact de la barrette. On appelle pied de barrette la portion de barrette radialement intérieure, au voisinage de la surface de fond. La distance radiale entre la surface de fond et la surface de roulement définit la hauteur de barrette.

Selon la direction axiale, une barrette s'étend vers l'intérieur à partir d'une face d'extrémité axialement extérieure jusqu'à une face d'extrémité axialement intérieure. La face d'extrémité axialement extérieure délimite axialement à l'extérieur une aile de barrette, portion de barrette axialement extérieure, positionnée à l'épaule ou bord de la bande de roulement. La face d'extrémité axialement intérieure délimite axialement à l'intérieur le nez de barrette, portion de barrette axialement intérieure, positionnée le plus souvent au milieu de la bande de roulement. La distance axiale entre la face d'extrémité axialement extérieure et la face d'extrémité axialement intérieure définit la largeur de barrette.

Selon la direction circonférentielle, une barrette s'étend, selon un sens de rotation préférentiel du pneumatique, entre une face d'attaque et une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite. La distance moyenne entre la face d'attaque et la face de fuite définit l'épaisseur moyenne de barrette.

Une barrette a usuellement un angle d'inclinaison moyen, par rapport à la direction circonférentielle, autour de 45°, l'angle d'inclinaison moyen étant la pente de la droite passant par les extrémités axiales de la barrette. Plus précisément et par convention, la droite définissant l'angle d'inclinaison moyen de la barrette passe par un point d'extrémité axialement intérieur de la face de fuite et par un point d'extrémité axialement extérieur de la face de fuite. Cet angle d'inclinaison moyen permet en particulier un compromis entre la traction en champ et le confort vibratoire. La traction en champ est d'autant meilleure que la barrette est radiale, c'est-à-dire que son angle d'inclinaison moyen est proche de 90°, alors que le confort vibratoire est d'autant meilleur que la barrette est longitudinale, c'est-à-dire que son angle d'inclinaison moyen est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement radiale à l'épaule et sensiblement longitudinale au milieu de la bande de roulement.

La bande de roulement d'un pneumatique pour véhicule agricole comprend usuellement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Diverses conceptions de bande de roulement à barrettes ont été proposées, selon l'amélioration de performances recherchée, comme le montrent, à titre d'exemples, les documents cités ci-après. Le document US4131148 présente une surface de fond à facettes pour améliorer la traction en champ et l'auto nettoyage de la bande de roulement. Le document US4611647 propose une barrette avec une face d'attaque dont le profil circonférentiel, selon un plan circonférentiel, parallèle au plan équatorial, est convexe et curviligne, afin d'améliorer la résistance à l'usure, l'efficacité en traction et la durée de vie. Le document US5010935 décrit une barrette dont la face d'attaque à un profil circonférentiel concave à double pente, pour une meilleure traction en champ et une meilleure résistance à l'arrachement. Le document JP11115417 décrit une barrette dont la face d'attaque à un profil circonférentiel convexe à double pente, pour améliorer la traction en champ et l'auto nettoyage de la bande de roulement.

L'amélioration de la traction en champ est donc une préoccupation constante du concepteur de pneumatique pour véhicule agricole, comme le montrent les documents de brevet de l'état technique précédemment cités.

De plus, concernant le fonctionnement en champ, une autre préoccupation importante du concepteur de pneumatique est l'amélioration de la résistance des barrettes aux agressions, et plus particulièrement aux agressions par les chaumes résiduels (« stubble ») dans les champs après la récolte. Un chaume est une portion de tige de plante dont l'extrémité libre est généralement acérée. L'extrémité libre acérée d'un chaume, qui entre en contact avec la face d'attaque d'une barrette, est susceptible de la perforer localement et superficiellement, ce qui entraîne un arrachement local du matériau élastomérique constitutif de la barrette. Les agressions répétées des faces d'attaque des barrettes par des chaumes peuvent provoquer une dégradation importante de l'aspect des barrettes, voire des arrachements notamment au voisinage des extrémités axialement intérieures ou extérieures des barrettes, c'est-à-dire au niveau des nez ou des ailes de barrettes. Ces dégradations sont un motif potentiel de réclamation de la part des utilisateurs, pouvant nécessiter le remplacement du pneumatique.

Le document EP 2714431 B1 décrit la bande de roulement d'un pneumatique pour véhicule agricole avec un risque diminué des agressions des faces d'attaque des extrémités axialement extérieures des barrettes par des chaumes résiduels après récolte («stubble») et donc d'arrachement. Ce but a été atteint grâce à un profil de face d'attaque optimisé, caractérisé en ce que l'angle de la droite tangente au profil d'attaque, en un point du profil d'attaque, par rapport au plan équatorial du pneumatique, augmente continûment, à partir d'un point le plus axialement extérieur du profil d'attaque, lorsque la distance axiale entre le point du profil d'attaque et le point le plus axialement extérieur du profil d'attaque augmente, en ce que l'angle atteint une valeur maximale en un point d'inflexion du profil d'attaque, et en ce que le rayon de courbure en tout point du profil d'attaque, positionné axialement entre le point le plus axialement extérieur et le point d'inflexion, est au moins égal à 0.4 fois la hauteur de barrette.

La présente invention a pour objectif de diminuer encore, pour une bande de roulement de pneumatique pour véhicule agricole, le risque d'agressions des faces d'attaque des ailes de barrettes par des chaumes résiduels après récolte («stubble»), tout en maintenant une bonne traction en champ.

Ce but a été atteint selon l'invention par un pneumatique pour véhicule agricole comprenant:
- une bande de roulement comprenant deux rangées de barrettes séparées les unes des autres par des sillons,
- deux barrettes consécutives d'une même rangée étant distantes, selon une direction circonférentielle, d'une distance circonférentielle P,
- chaque barrette s'étendant selon une direction radiale à partir d'une surface de fond jusqu'à une face de contact sur une hauteur radiale H, s'étendant selon une direction axiale à partir d'une face d'extrémité axialement intérieure jusqu'à une face d'extrémité axialement extérieure sur une largeur axiale L, et s'étendant selon la direction circonférentielle à partir d'une face de fuite jusqu'à une face d'attaque sur une épaisseur moyenne E,
- chaque barrette ayant une direction moyenne, passant par un point d'extrémité axialement intérieur de la face de fuite et par un point d'extrémité axialement extérieur de la face de fuite, et formant, avec la direction circonférentielle, un angle moyen A,
- la face d'attaque de chaque barrette comprenant un décrochement s'étendant circonférentiellement en direction de la face de fuite, axialement vers l'intérieur à partir de la face d'extrémité axialement extérieure et radialement vers l'intérieur à partir de la face de contact
- et le décrochement de la face d'attaque de chaque barrette étant prolongé par un creux formé dans la surface de fond.

Ainsi chaque barrette de la bande de roulement d'un pneumatique pour véhicule agricole selon l'invention comprend, au niveau de sa face d'attaque et dans sa portion d'extrémité axialement extérieure ou aile, un décrochement permettant l'évacuation des chaumes résiduels vers l'extérieur de la bande de roulement. Les documents JPH 01122306 et JP2014234084 décrivent un tel décrochement au niveau de la face d'attaque d'une barrette.

Cette optimisation de la géométrie locale de la barrette permet de conserver les caractéristiques géométriques du reste de la barrette, et donc de maintenir globalement les performances de traction en champ, de résistance à l'usure et de résistance aux arrachements. En d'autres termes, la fonction d'évacuation des chaumes résiduels est décorrélée des autres fonctions de la bande de roulement.

Le décrochement de la face d'attaque permet en outre d'augmenter, si nécessaire, l'angle formé par la face d'attaque avec la direction radiale, ce qui est favorable à l'évacuation des chaumes au niveau de l'aile de barrette.

Selon l'invention, le décrochement de la face d'attaque de chaque barrette est prolongé par un creux formé dans la surface de fond.

La combinaison d'un décrochement de la face d'attaque et d'un creux, formé dans la surface de fond et positionné en pied de barrette, permet d'obtenir une surface conique s'appuyant sur la face d'attaque et la surface de fond, améliorant encore la capacité d'évacuation des chaumes au niveau de l'aile de barrette. En outre, ce cône d'évacuation est favorable à la traction en champ, et à l'évacuation de la terre.

Avantageusement le décrochement de la face d'attaque de chaque barrette s'étend circonférentiellement en direction de la face de fuite sur une distance circonférentielle X₁₁ au moins égale à 0.05 fois l'épaisseur moyenne E de la barrette et au plus égale à 0.35 fois l'épaisseur moyenne E de la barrette.

La distance circonférentielle X₁₁ du décrochement de la face d'attaque est mesurée selon la direction circonférentielle du pneumatique, alors que l'épaisseur moyenne E de la barrette est la distance maximale mesurée entre la face d'attaque et la face de fuite.

En deçà de 0.05 fois l'épaisseur moyenne E de la barrette, la distance circonférentielle X₁₁ du décrochement de la face d'attaque est insuffisante pour assurer l'évacuation des chaumes résiduels. Au-delà de 0.35 fois l'épaisseur moyenne E de la barrette, la distance circonférentielle X₁₁ du décrochement de la face d'attaque a un impact négatif sur les autres performances de la barrette telles que la traction en champ, la résistance à l'usure et la résistance aux arrachements. En outre, la plage de valeurs de la distance circonférentielle X₁₁ du décrochement de la face d'attaque permet d'augmenter localement, au niveau du décrochement de la face d'attaque, l'angle formé par la face d'attaque avec la direction radiale, ainsi que le rayon de raccordement de la face d'attaque avec la surface de fond, ce qui est favorable à l'évacuation des chaumes au niveau de l'aile de barrette.

Egalement avantageusement le décrochement de la face d'attaque de chaque barrette s'étend axialement vers l'intérieur à partir de la face d'extrémité axialement extérieure sur une distance axiale Y₁₁ au moins égale à 0.1 fois la largeur axiale L de la barrette et au plus égale à 0.3 fois la largeur axiale L de la barrette.

Cette plage de la distance axiale Y₁₁ du décrochement de la face d'attaque définit la largeur axiale de la portion de barrette à protéger spécifiquement des agressions par les chaumes résiduels.

Encore avantageusement le décrochement de la face d'attaque de chaque barrette s'étend radialement vers l'intérieur à partir de la face de contact sur une distance radiale Z₁₁ au moins égale à la hauteur radiale H de la barrette et au plus égale à 1.3 fois la hauteur radiale H de la barrette.

Cette plage de la distance radiale Z₁₁ du décrochement de la face d'attaque est considérée, par les inventeurs, comme optimale vis-à-vis d'une géométrie de surface de fond, efficace vis-à-vis de l'évacuation des chaumes tout en évitant l'ajout de matière superflue.

Préférentiellement, le décrochement de la face d'attaque ayant une direction moyenne, passant par un point d'extrémité axialement intérieur du décrochement de la face d'attaque et par un point d'extrémité axialement extérieur du décrochement de la face d'attaque, et formant, avec la direction circonférentielle, un angle moyen A₁₁, la différence entre l'angle moyen A de la barrette et l'angle moyen A₁₁ du décrochement de la face d'attaque est au moins égale à 0° et au plus égale à 10°, de préférence au plus égale à 8°.

En d'autres termes, l'angle moyen A₁₁ est au plus égal à l'angle moyen A, et diffère de celui-ci d'un angle au plus égal à 10°, de préférence au plus égal à 8°. Une différence entre l'angle moyen A de la barrette et l'angle moyen A₁₁ du décrochement de la face d'attaque inférieure à 0° est défavorable à l'évacuation des chaumes au niveau de l'aile de barrette.

Selon un mode de réalisation préféré, le décrochement de la face d'attaque de chaque barrette comprend une première face de décrochement s'étendant axialement vers l'extérieur à partir de la face d'attaque jusqu'à une deuxième face de décrochement.

La présence d'une première face de décrochement se raccordant à une deuxième face de décrochement permet de définir une transition entre la zone courante de la barrette et l'aile de barrette, en permettant de conserver les caractéristiques géométriques globales de la barrette, et en particulier son épaisseur, sur la plus grande distance axiale possible, à partir du nez de barrette, sans dégrader les performances de résistance à l'usure et de résistance aux arrachements.

Selon une variante de ce mode de réalisation préféré, la première face de décrochement de la face d'attaque formant, avec la direction moyenne de la barrette, un angle A₁₁₁, l'angle A₁₁₁ est au moins égale à 20° et au plus égal à 40°.

Avantageusement le creux formé dans la surface de fond s'étend circonférentiellement à partir du décrochement sur une distance circonférentielle X₁₂ au moins égale à 0.2 fois la distance circonférentielle moyenne P entre deux barrettes consécutives et au plus égale à la distance circonférentielle moyenne P entre deux barrettes consécutives.

Cette plage de la distance circonférentielle X₁₂ du creux formé dans la surface de fond est considérée, par les inventeurs, comme optimale vis-à-vis d'une géométrie de surface de fond, efficace vis-à-vis de l'évacuation des chaumes sans dégrader la résistance à l'usure et la résistance aux arrachements. En outre, cette géométrie de creux est favorable à la traction en champ, et à l'évacuation de la terre.

Egalement avantageusement le décrochement de la face d'attaque de chaque barrette s'étendant axialement vers l'intérieur à partir de la face d'extrémité axialement extérieure sur une distance axiale Y₁₁, le creux formé dans la surface de fond s'étend axialement vers l'intérieur à partir de la face d'extrémité axialement extérieure sur une distance axiale Y₁₂ égale à la distance axiale Y₁₁ sur laquelle s'étend axialement le décrochement de la face d'attaque de la barrette.

En d'autres termes, selon la direction axiale, le creux formé dans la surface de fond s'inscrit dans la continuité du décrochement de la face d'attaque, cette largeur axiale identique pour le creux et le décrochement définissant largeur axiale de la portion de barrette à protéger spécifiquement des agressions par les chaumes résiduels.

Encore avantageusement le creux formé dans la surface de fond s'étend radialement vers l'intérieur à partir de la surface de fond sur une distance radiale Z₁₂ au moins égale à 0.03 fois la hauteur radiale H de la barrette et au plus égale à 0.35 fois la hauteur radiale H de la barrette.

Le plus souvent, le creux formé dans la surface de fond s'étend donc radialement vers l'intérieur à partir de la surface de fond sur une distance radiale Z₁₂ variable, au moins égale à 0.03 fois et au plus égale à 0.35 fois la hauteur radiale H de la barrette. Ceci contribue à l'efficacité de l'évacuation des chaumes, et, le cas échéant, à la traction en champ et à l'évacuation de la terre.

Préférentiellement la distance radiale Z₁₂ augmente quand la distance circonférentielle X₁₂ augmente.

En d'autres termes, la profondeur du creux augmente quand on s'éloigne de la face d'attaque de la barrette. Cette évolution de la profondeur du creux permet de créer une surface conique facilitant l'éjection des chaumes et l'évacuation de la terre.

Selon un autre mode de réalisation préféré, la face de fuite de chaque barrette comprend un décrochement s'étendant circonférentiellement en direction de la face d'attaque de la barrette consécutive la plus proche, axialement vers l'intérieur à partir de la face d'extrémité axialement extérieure et radialement vers l'intérieur à partir de la face de contact jusqu'à au moins la surface de fond.

Ce décrochement sur la face de fuite constitue une protubérance qui apporte un gain volumique de matière, ce qui permet de compenser la diminution du volume de barrette résultant du décrochement de la face d'attaque.

Avantageusement le décrochement de la face de fuite de chaque barrette s'étend circonférentiellement en direction de la face d'attaque de la barrette consécutive sur une distance circonférentielle X₁₃ au moins égale à 0.05 fois l'épaisseur moyenne E de la barrette et au plus égale à 0.5 fois l'épaisseur moyenne E de la barrette.

Egalement avantageusement, le décrochement de la face d'attaque de chaque barrette s'étendant axialement vers l'intérieur à partir de la face d'extrémité axialement extérieure sur une distance axiale Y₁₁, le décrochement de la face de fuite de chaque barrette s'étend axialement vers l'intérieur à partir de la face d'extrémité axialement extérieure sur une distance axiale Y₁₃ au moins égale à la distance axiale Y₁₁ sur laquelle s'étend axialement le décrochement de la face d'attaque de la barrette.

Encore avantageusement, le décrochement de la face de fuite de chaque barrette s'étend radialement vers l'intérieur à partir de la face de contact jusqu'à la surface de fond, sur une distance radiale Z₁₃ égale à la hauteur radiale H de la barrette.

Les caractéristiques géométriques du décrochement de la face de fuite, précédemment décrites, permettent de conserver ainsi une épaisseur moyenne de l'aile de barrette sensiblement égale à l'épaisseur moyenne de la barrette en zone courante, et, par conséquent, des caractéristiques de rigidité de la barrette sensiblement constantes sur toute la largeur axiale de la barrette. Ceci permet de maintenir un bon niveau de résistance à l'usure et de résistance aux arrachements et à la fatigue, par rapport à une barrette usuelle d'épaisseur moyenne sensiblement constante sur toute sa largeur axiale.

Préférentiellement la bande de roulement est constituée d'une première et d'une seconde rangées de barrettes disposées en chevrons par rapport au plan équatorial du pneumatique. Ce mode de réalisation en chevrons de la bande de roulement est usuel pour une bande de roulement de pneumatique pour véhicule agricole.

Encore préférentiellement, l'angle moyen A de chaque barrette est au moins égal à 20° et au plus égal à 70°, de préférence au moins égal à 30° et au plus égal à 60°.

La présente invention sera mieux comprise à l'aide des figures 1 à 4 décrites ci-après :
- Figure 1 : vue en perspective d'un pneumatique pour véhicule agricole selon un mode de réalisation préféré de l'invention,
- Figure 2: vue de dessus d'une portion de bande de roulement d'un pneumatique pour véhicule agricole selon un mode de réalisation préféré de l'invention,
- Figure 3 : vue en perspective d'une barrette de bande de roulement d'un pneumatique pour véhicule agricole selon un mode de réalisation préféré de l'invention,
- Figure 4 : vue de dessus d'une barrette de bande de roulement d'un pneumatique pour véhicule agricole selon un mode de réalisation préféré de l'invention.

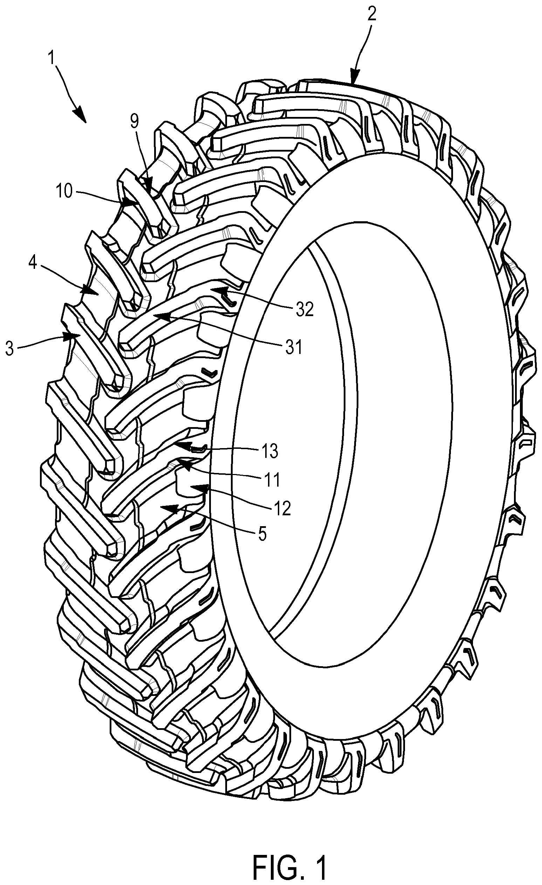

La figure 1 est une vue en perspective d'un pneumatique 1 pour véhicule agricole, selon un mode de réalisation préféré de l'invention. La bande de roulement 2 du pneumatique est constituée de barrettes 3 séparées les unes des autres par des sillons 4. Dans le cas présent, la bande de roulement 2 est constituée d'une première et d'une seconde rangées de barrettes 3 disposées en chevrons par rapport au plan équatorial du pneumatique. Les portions d'extrémités axialement extérieures ou ailes de barrettes 32 sont décalées circonférentiellement par rapport aux portions courantes 31 de barrettes, axialement intérieures, du fait de la présence d'un décrochement 11 de la face d'attaque 10 et d'un décrochement 13 de la face de fuite 9. En outre, la surface de fond 5 comprend un creux 12 au pied de chaque aile de barrette 32.

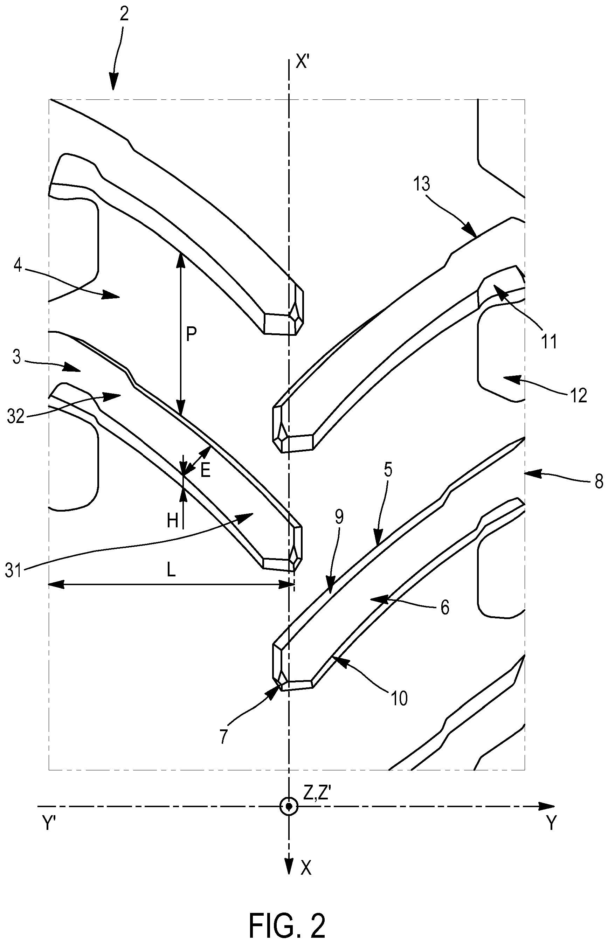

La figure 2 est une vue de dessus d'une portion de bande de roulement 2 d'un pneumatique pour véhicule agricole selon un mode de réalisation préféré de l'invention. La bande de roulement 2 du pneumatique est constituée de barrettes 3 séparées les unes des autres par des sillons 4 et est constituée d'une première et d'une seconde rangées de barrettes 3 disposées en chevrons par rapport au plan équatorial du pneumatique. Deux barrettes 3 consécutives d'une même rangée sont distantes, selon une direction circonférentielle XX', d'une distance circonférentielle P. Chaque barrette 3 comprend une portion courante axialement intérieure 31 et une aile de barrette 32, ou portion d'extrémité axialement extérieure de barrette. Chaque barrette 3 s'étend selon une direction radiale ZZ' vers l'extérieur à partir d'une surface de fond 5 jusqu'à une face de contact 6 sur une hauteur radiale H, s'étend selon une direction axiale YY' vers l'extérieur à partir d'une face d'extrémité axialement intérieure 7 jusqu'à une face d'extrémité axialement extérieure 8 sur une largeur axiale L, et s'étend selon la direction circonférentielle XX' à partir d'une face de fuite 9 jusqu'à une face d'attaque 10 sur une épaisseur moyenne E. La face d'attaque 10 de chaque barrette 3 comprend un décrochement 11 s'étendant circonférentiellement en direction de la face de fuite 9, axialement vers l'intérieur à partir de la face d'extrémité axialement extérieure 8 et radialement vers l'intérieur à partir de la face de contact 6. Selon l'invention, le décrochement 11 de la face d'attaque 10 de chaque barrette 3 est prolongé par un creux 12 formé dans la surface de fond 5. Préférentiellement, la face de fuite 9 de chaque barrette 3 comprend un décrochement 13 s'étendant circonférentiellement en direction de la face d'attaque 10 de la barrette 3 consécutive la plus proche, axialement vers l'intérieur à partir de la face d'extrémité axialement extérieure 7 et radialement vers l'intérieur à partir de la face de contact 6 jusqu'à au moins la surface de fond 5.

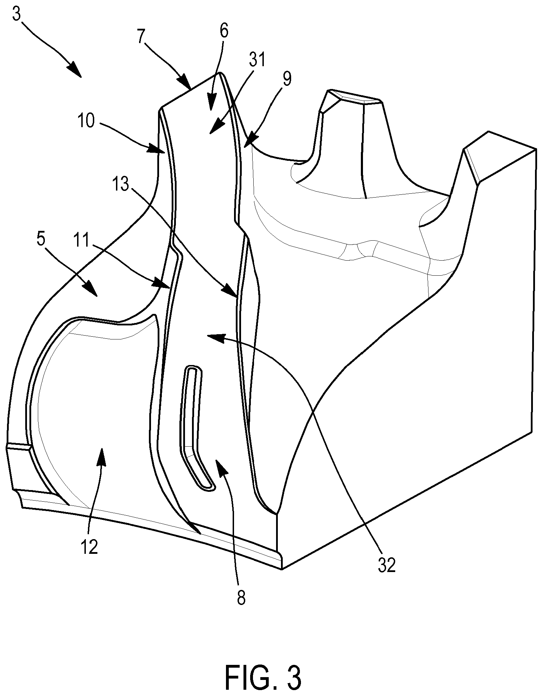

La figure 3 est une vue en perspective d'une barrette de bande de roulement d'un pneumatique pour véhicule agricole selon un mode de réalisation préféré de l'invention. Sont représentées les extrémités respectivement axialement intérieure 7 et axialement extérieure 8 de la barrette 3, ainsi que les faces respectivement de fuite 9, d'attaque 10, de contact 6 et la surface de fond 5. Sont également représentées la portion courante axialement intérieure 31 ainsi que l'aile de barrette 32 comprenant un décrochement 11 au niveau de la face d'attaque 10, un creux 12 au niveau de la surface de fond 5 ainsi qu'un décrochement 13 au niveau de la face de fuite 9.

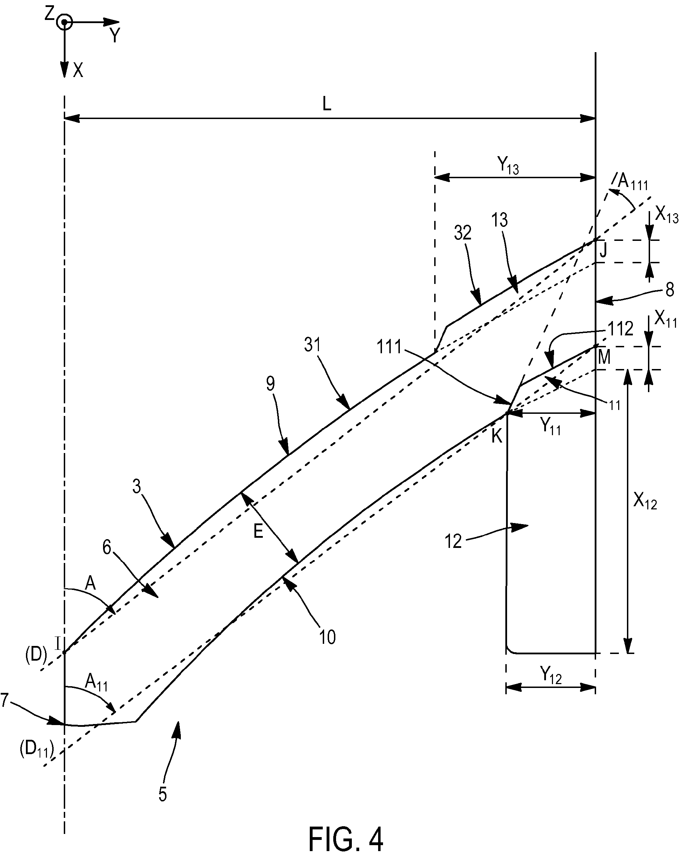

La figure 4 est une vue de dessus d'une barrette 3 de bande de roulement d'un pneumatique pour véhicule agricole selon un mode de réalisation préféré de l'invention. Comme dans les figures 2 et 3, sont représentées les extrémités respectivement axialement intérieure 7 et axialement extérieure 8 de la barrette 3, ainsi que les faces respectivement de fuite 9, d'attaque 10, de contact 6 et la surface de fond 5. Sont également représentées la portion courante axialement intérieure 31 et l'aile de barrette 32. La barrette 3 a une épaisseur moyenne E et une largeur axiale L. La barrette 3 a également une direction moyenne D, passant par un point d'extrémité axialement intérieur I de la face de fuite 9 et par un point d'extrémité axialement extérieur J de la face de fuite 9, et formant, avec la direction circonférentielle XX', un angle moyen A. Le décrochement 11 de la face d'attaque 10 de la barrette 3 s'étend circonférentiellement en direction de la face de fuite 9 sur une distance circonférentielle X₁₁, axialement vers l'intérieur à partir de la face d'extrémité axialement extérieure 7 sur une distance axiale Y₁₁ et radialement vers l'intérieur à partir de la face de contact 6 sur une distance radiale Z₁₁ (non représentée). Le décrochement 11 de la face d'attaque 10 a une direction moyenne Du, passant par un point d'extrémité axialement intérieur K du décrochement 11 de la face d'attaque 10 et par un point d'extrémité axialement extérieur M du décrochement 11 de la face d'attaque 10, et formant, avec la direction circonférentielle XX', un angle moyen A₁₁. En outre le décrochement 11 de la face d'attaque 10 de la barrette 3 comprend une première face de décrochement 111 s'étendant axialement vers l'extérieur à partir de la face d'attaque 10 jusqu'à une deuxième face de décrochement 112. En outre, le décrochement 11 de la face d'attaque 10 de la barrette 3 prolongé par un creux 12 formé dans la surface de fond 5, s'étendant circonférentiellement à partir du décrochement 10 sur une distance circonférentielle X₁₂, axialement vers l'intérieur à partir de la face d'extrémité axialement extérieure 7 sur une distance axiale Y₁₂ égale à la distance axiale Y₁₁ sur laquelle s'étend axialement le décrochement 11 de la face d'attaque 10 de la barrette 3, et radialement vers l'intérieur à partir de la surface de fond 5 sur une distance radiale Z₁₂ (non représentée) augmentant quand la distance circonférentielle X₁₂ augmente. Enfin, la face de fuite 9 de la barrette 3 comprend un décrochement 13 s'étendant circonférentiellement en direction de la face d'attaque 10 de la barrette 3 consécutive la plus proche, axialement vers l'intérieur à partir de la face d'extrémité axialement extérieure 7 et radialement vers l'intérieur à partir de la face de contact 6 jusqu'à la surface de fond 5. Le décrochement 13 de la face de fuite 9 de la barrette 3 s'étend circonférentiellement en direction de la face d'attaque 10 de la barrette 3 consécutive sur une distance circonférentielle X₁₃, axialement vers l'intérieur à partir de la face d'extrémité axialement extérieure 7 sur une distance axiale Y₁₃, et radialement vers l'intérieur à partir de la face de contact 6 jusqu'à la surface de fond 5, sur une distance radiale Z₁₃ (non représentée).

L'invention a été plus particulièrement mise en œuvre pour un pneumatique agricole de dimension 380/80R38. Le tableau 1 ci-dessous présente les caractéristiques techniques d'un exemple d'un mode de réalisation préféré de l'invention, tel que représenté sur les figures 1 à 4:

**Tableau 1**

| Caractéristiques géométriques | Valeurs de l'exemple |
|---|---|
| Hauteur de barrette H | 52 mm |
| Largeur axiale de barrette L | 174 mm |
| Epaisseur moyenne de barrette E | 33 mm |
| Angle moyen A de la barrette | 46° |
| Distance circonférentielle P entre deux barrettes consécutives | 180 mm |
| Distance circonférentielle X₁₁ du décrochement 11 de la face d'attaque 10 | 5.4 mm |
| Distance axiale Y₁₁ du décrochement 11 de la face d'attaque 10 | 27 mm |
| Distance radiale Z₁₁ du décrochement 11 de la face d'attaque 10 | 54.8 mm |
| Angle moyen A₁₁ du décrochement 11 | 45° |
| Angle A₁₁₁ de la 1^{ère} face 111 du décrochement 11 | 21° |
| Distance circonférentielle X₁₂ du creux 12 | 118 mm |
| Distance axiale Y₁₂ du creux 12 | 27 mm |
| Distance radiale Z₁₂ maximale du creux 12 | 3 mm |
| Distance circonférentielle X₁₃ du décrochement 13 de la face de fuite 9 | 7.6 mm |
| Distance axiale Y₁₃ du décrochement 13 de la face de fuite 9 | 55.7 mm |
| Distance radiale Z₁₃ du décrochement 13 de la face de fuite 9 | 52 mm |

Concernant les caractéristiques géométriques du décrochement 11 de la face d'attaque 10 de l'exemple, la distance circonférentielle X₁₁ du décrochement 11 de la face d'attaque 10 est égale à 0.16 fois l'épaisseur moyenne de barrette E, la distance axiale Y₁₁ du décrochement 11 de la face d'attaque 10 est égale à 0.15 fois la largeur axiale de barrette L et la distance radiale Z₁₁ du décrochement 11 de la face d'attaque 10 est égale à 1.05 fois la hauteur de barrette H.

Concernant les caractéristiques géométriques du creux 12 de l'exemple, la distance circonférentielle X₁₂ du creux 12 est égale à 0.65 fois la distance circonférentielle P entre deux barrettes consécutives, la distance axiale Y₁₂ du creux 12 est égale à la distance axiale Y₁₁ du décrochement 11 de la face d'attaque 10 et la distance radiale Z₁₂ du creux 12 est égale à 0.06 fois la hauteur de barrette H.

Concernant les caractéristiques géométriques du décrochement 13 de la face de fuite 9 de l'exemple, la distance circonférentielle X₁₃ du décrochement 13 de la face de fuite 9 est égale à 0.23 fois l'épaisseur moyenne de barrette E, la distance axiale Y₁₃ du décrochement 13 de la face de fuite 9 est égale à 0.32 fois la largeur axiale de barrette L, donc est supérieure à la distance axiale Y₁₁ du décrochement 11 de la face d'attaque 10, et la distance radiale Z₁₃ du décrochement 13 de la face de fuite 9 est égale à la hauteur de barrette H.

Les inventeurs ont comparé, sur des tests internes, les performances de traction en champ et de résistance aux agressions par des chaumes, entre un pneumatique agricole selon l'invention, tel que caractérisé dans le tableau 1 précédent, et un pneumatique de référence à barrettes classiques, une barrette classique n'ayant aucun décrochement ni sur sa face d'attaque ni sur sa face de fuite et aucun creux en pied de barrette. Ils ont pu montrer qu'un pneumatique selon l'invention, tel que défini dans l'exemple du tableau 1, permet, par rapport à un pneumatique de référence à barrettes classiques, de diminuer les agressions des faces d'attaque des ailes de barrettes par des chaumes résiduels après récolte («stubble»), tout en maintenant une bonne traction en champ.

## Revendications

1. - Pneumatique (1) pour véhicule agricole comprenant:
- une bande de roulement (2) comprenant deux rangées de barrettes (3) séparées les unes des autres par des sillons (4),
- deux barrettes (3) consécutives d'une même rangée étant distantes, selon une direction circonférentielle (XX'), d'une distance circonférentielle P,
- chaque barrette (3) s'étendant selon une direction radiale (ZZ') à partir d'une surface de fond (5) jusqu'à une face de contact (6) sur une hauteur radiale H, s'étendant selon une direction axiale (YY') à partir d'une face d'extrémité axialement intérieure (7) jusqu'à une face d'extrémité axialement extérieure (8) sur une largeur axiale L, et s'étendant selon la direction circonférentielle (XX') à partir d'une face de fuite (9) jusqu'à une face d'attaque (10) sur une épaisseur moyenne E,
- chaque barrette (3) ayant une direction moyenne (D), passant par un point d'extrémité axialement intérieur (I) de la face de fuite (9) et par un point d'extrémité axialement extérieur (J) de la face de fuite (9), et formant, avec la direction circonférentielle (XX'), un angle moyen A,
la face d'attaque (10) de chaque barrette (3) comprenant un décrochement (11) s'étendant circonférentiellement en direction de la face de fuite (9), axialement vers l'intérieur à partir de la face d'extrémité axialement extérieure (8) et radialement vers l'intérieur à partir de la face de contact (6),
**caractérisé en ce que** le décrochement (11) de la face d'attaque (10) de chaque barrette (3) est prolongé par un creux (12) formé dans la surface de fond (5).

2. - Pneumatique (1) selon la revendication 1, **dans lequel** le décrochement (11) de la face d'attaque (10) de chaque barrette (3) s'étend circonférentiellement en direction de la face de fuite (9) sur une distance circonférentielle X₁₁ au moins égale à 0.05 fois l'épaisseur moyenne E de la barrette (3) et au plus égale à 0.35 fois l'épaisseur moyenne E de la barrette (3).

3. - Pneumatique (1) selon l'une des revendications 1 ou 2, **dans lequel** le décrochement (11) de la face d'attaque (10) de chaque barrette (3) s'étend axialement vers l'intérieur à partir de la face d'extrémité axialement extérieure (7) sur une distance axiale Y₁₁ au moins égale à 0.1 fois la largeur axiale L de la barrette (3) et au plus égale à 0.3 fois la largeur axiale L de la barrette (3).

4. - Pneumatique (1) selon l'une quelconque des revendications 1 à 3, **dans lequel** le décrochement (11) de la face d'attaque (10) de chaque barrette (3) s'étend radialement vers l'intérieur à partir de la face de contact (6) sur une distance radiale Z₁₁ au moins égale à la hauteur radiale H de la barrette (3) et au plus égale à 1.3 fois la hauteur radiale H de la barrette (3).

5. - Pneumatique (1) selon l'une quelconque des revendications 1 à 4, le décrochement (11) de la face d'attaque (10) ayant une direction moyenne (Du), passant par un point d'extrémité axialement intérieur (K) du décrochement (11) de la face d'attaque (10) et par le point d'extrémité axialement extérieur (M) du décrochement (11) de la face d'attaque (10), et formant, avec la direction circonférentielle (XX'), un angle moyen A₁₁, **dans lequel** la différence entre l'angle moyen A de la barrette (3) et l'angle moyen A₁₁ du décrochement (11) de la face d'attaque (10) est au moins égale à 0° et au plus égale à 10°, de préférence au plus égale à 8°.

6. - Pneumatique (1) selon l'une quelconque des revendications 1 à 5, **dans lequel** le décrochement (11) de la face d'attaque (10) de chaque barrette (3) comprend une première face de décrochement (111) s'étendant axialement vers l'extérieur à partir de la face d'attaque (10) jusqu'à une deuxième face de décrochement (112).

7. - Pneumatique (1) selon la revendication 6, la première face de décrochement (111) de la face d'attaque (10) formant, avec la direction moyenne (D) de la barrette (3), un angle A₁₁₁, **dans lequel** l'angle A₁₁₁ est au moins égale à 20° et au plus égal à 40°.

8. - Pneumatique (1) selon l'une quelconque des revendications 1 à 7, **dans lequel** le creux (12) formé dans la surface de fond (5) s'étend circonférentiellement à partir du décrochement (10) sur une distance circonférentielle X₁₂ au moins égale à 0.2 fois la distance circonférentielle moyenne P entre deux barrettes (3) consécutives et au plus égale à la distance circonférentielle moyenne P entre deux barrettes (3) consécutives.

9. - Pneumatique (1) selon l'une quelconque des revendications 1 à 8, le décrochement (11) de la face d'attaque (10) de chaque barrette (3) s'étendant axialement vers l'intérieur à partir de la face d'extrémité axialement extérieure (7) sur une distance axiale Y₁₁, **dans lequel** le creux (12) formé dans la surface de fond (5) s'étend axialement vers l'intérieur à partir de la face d'extrémité axialement extérieure (7) sur une distance axiale Y₁₂ égale à la distance axiale Y₁₁ sur laquelle s'étend axialement le décrochement (11) de la face d'attaque (10) de la barrette (3).

10. - Pneumatique (1) selon l'une quelconque des revendications 1 à 9, **dans lequel** le creux (12) formé dans la surface de fond (5) s'étend radialement vers l'intérieur à partir de la surface de fond (5) sur une distance radiale Z₁₂ au moins égale à 0.03 fois la hauteur radiale H de la barrette (3) et au plus égale à 0.35 fois la hauteur radiale H de la barrette (3).

11. - Pneumatique (1) selon la revendication 10, **dans lequel** la distance radiale Z₁₂ augmente quand la distance circonférentielle X₁₂ augmente.

12. - Pneumatique (1) selon l'une quelconque des revendications 1 à 11, **dans lequel** la face de fuite (9) de chaque barrette (3) comprend un décrochement (13) s'étendant circonférentiellement en direction de la face d'attaque (10) de la barrette (3) consécutive la plus proche, axialement vers l'intérieur à partir de la face d'extrémité axialement extérieure (7) et radialement vers l'intérieur à partir de la face de contact (6) jusqu'à au plus la surface de fond (5).

13. - Pneumatique (1) selon la revendication 12, **dans lequel** le décrochement (13) de la face de fuite (9) de chaque barrette (3) s'étend circonférentiellement en direction de la face d'attaque (10) de la barrette (3) consécutive sur une distance circonférentielle X₁₃ au moins égale à 0.05 fois l'épaisseur moyenne E de la barrette (3) et au plus égale à 0.5 fois l'épaisseur moyenne E de la barrette (3).

14. - Pneumatique (1) selon l'une des revendications 12 ou 13, le décrochement (11) de la face d'attaque (10) de chaque barrette (3) s'étendant axialement vers l'intérieur à partir de la face d'extrémité axialement extérieure (7) sur une distance axiale Y₁₁, **dans lequel** le décrochement (13) de la face de fuite (9) de chaque barrette (3) s'étend axialement vers l'intérieur à partir de la face d'extrémité axialement extérieure (7) sur une distance axiale Y₁₃ au moins égale à la distance axiale Y₁₁ sur laquelle s'étend axialement le décrochement (11) de la face d'attaque (10) de la barrette (3).

15. - Pneumatique (1) selon l'une quelconque des revendications 12 à 14, **dans lequel** le décrochement (13) de la face de fuite (9) de chaque barrette (3) s'étend radialement vers l'intérieur à partir de la face de contact (6) jusqu'à la surface de fond (5), sur une distance radiale Z₁₃ égale à la hauteur radiale H de la barrette (3).

16. - Pneumatique (1) l'une quelconque des revendications 1 à 15, **dans lequel** la bande de roulement est constituée d'une première et d'une seconde rangées de barrettes (3) disposées en chevrons par rapport au plan équatorial (C) du pneumatique.

17. - Pneumatique (1) l'une quelconque des revendications 1 à 16, **dans lequel** l'angle moyen A de chaque barrette (3) est au moins égal à 20° et au plus égal à 70°, de préférence au moins égal à 30° et au plus égal à 60°.

## Patentansprüche

1. Reifen (1) für ein landwirtschaftliches Nutzfahrzeug, umfassend:
- einen Laufstreifen (2), umfassend zwei Reihen von Stollen (3), die durch Rillen (4) voneinander getrennt sind,
- wobei zwei aufeinanderfolgende Stollen (3) einer gleichen Reihe in einer Umfangsrichtung (XX') um einen Umfangsabstand P voneinander beabstandet sind,
- wobei sich jeder Stollen (3) in einer radialen Richtung (ZZ') von einer Bodenfläche (5) bis zu einer Kontaktfläche (6) über eine radiale Höhe H erstreckt, in einer axialen Richtung (YY') von einer axial inneren Endfläche (7) bis zu einer axial äußeren Fläche (8) über eine axiale Breite L erstreckt und in der Umfangsrichtung (XX') von einer hinteren Fläche (9) bis zu einer vorderen Fläche (10) über eine mittlere Dicke E erstreckt,
- wobei jeder Stollen (3) eine mittlere Richtung (D) aufweist, die durch einen axial inneren Endpunkt (I) der hinteren Fläche (9) und durch einen axial äußeren Endpunkt (J) der hinteren Fläche (9) verläuft und mit der Umfangsrichtung (XX') einen mittleren Winkel A bildet, wobei die vordere Fläche (10) jedes Stollens (3) einen Absatz (11) umfasst, der sich in Umfangsrichtung in Richtung der hinteren Fläche (9), von der axial äußeren Endfläche (8) axial nach innen und von der Kontaktfläche (6) radial nach innen erstreckt,
**dadurch gekennzeichnet, dass** der Absatz (11) der vorderen Fläche (10) jedes Stollens (3) durch eine in der Bodenfläche (5) ausgebildete Vertiefung (12) verlängert wird.

2. Reifen (1) nach Anspruch 1, wobei sich der Absatz (11) der vorderen Fläche (10) jedes Stollens (3) in Umfangsrichtung in Richtung der hinteren Fläche (9) über einen Umfangsabstand X₁₁ von mindestens dem 0,05-fachen der mittleren Dicke E des Stollens (3) und höchstens dem 0,35-fachen der mittleren Dicke E des Stollens (3) erstreckt.

3. Reifen (1) nach einem der Ansprüche 1 oder 2, wobei sich der Absatz (11) der vorderen Fläche (10) jedes Stollens (3) von der axial äußeren Endfläche (7) über einen axialen Abstand Y₁₁ von mindestens dem 0,1-fachen der axialen Breite L des Stollens (3) und höchstens dem 0,3-fachen der axialen Breite L des Stollens (3) axial nach innen erstreckt.

4. Reifen (1) nach einem der Ansprüche 1 bis 3, wobei sich der Absatz (11) der vorderen Fläche (10) jedes Stollens (3) von der Kontaktfläche (6) über einen radialen Abstand Z₁₁ von mindestens der radialen Höhe H des Stollens (3) und höchstens dem 1,3-fachen der radialen Höhe H des Stollens (3) radial nach innen erstreckt.

5. Reifen (1) nach einem der Ansprüche 1 bis 4, wobei der Absatz (11) der vorderen Fläche (10) eine mittlere Richtung (D₁₁) aufweist, die durch einen axial inneren Endpunkt (K) des Absatzes (11) der vorderen Fläche (10) und durch den axial äußeren Endpunkt (M) des Absatzes (11) der vorderen Fläche (10) verläuft und mit der Umfangsrichtung (XX') einen mittleren Winkel A₁₁ bildet, wobei die Differenz zwischen dem mittleren Winkel A des Stollens (3) und dem mittleren Winkel A₁₁ des Absatzes (11) der vorderen Fläche (10) mindestens 0° und höchstens 10°, vorzugsweise höchstens 8°, beträgt.

6. Reifen (1) nach einem der Ansprüche 1 bis 5, wobei der Absatz (11) der vorderen Fläche (10) jedes Stollens (3) eine erste Absatzfläche (111) umfasst, die sich von der vorderen Fläche (10) axial nach außen bis zu einer zweiten Absatzfläche (112) erstreckt.

7. Reifen (1) nach Anspruch 6, wobei die erste Absatzfläche (111) der vorderen Fläche (10) mit der mittleren Richtung (D) des Stollens (3) einen Winkel A₁₁ bildet, wobei der Winkel A₁₁₁ mindestens 20° und höchstens 40° beträgt.

8. Reifen (1) nach einem der Ansprüche 1 bis 7, wobei sich die in der Bodenfläche (5) ausgebildete Vertiefung (12) in Umfangsrichtung vom Absatz (10) über einen Umfangsabstand X₁₂ von mindestens dem 0,2-fachen des mittleren Umfangsabstands P zwischen zwei aufeinanderfolgenden Stollen (3) und höchstens dem mittleren Umfangsabstand P zwischen zwei aufeinanderfolgenden Stollen (3) erstreckt.

9. Reifen (1) nach einem der Ansprüche 1 bis 8, wobei sich der Absatz (11) der vorderen Fläche (10) jedes Stollens (3) von der axial äußeren Endfläche (7) über einen axialen Abstand Y₁₁ axial nach innen erstreckt, wobei sich die in der Bodenfläche (5) ausgebildete Vertiefung (12) von der axial äußeren Endfläche (7) über einen axialen Abstand Y₁₂, der gleich dem axialen Abstand Y₁₁ ist, über den sich der Absatz (11) der vorderen Fläche (10) des Stollens (3) axial erstreckt, axial nach innen erstreckt.

10. Reifen (1) nach einem der Ansprüche 1 bis 9, wobei sich die in der Bodenfläche (5) ausgebildete Vertiefung (12) von der Bodenfläche (5) über einen radialen Abstand Z₁₂ von mindestens dem 0,03-fachen der radialen Höhe H des Stollens (3) und höchstens dem 0,35-fachen der radialen Höhe H des Stollens (3) radial nach innen erstreckt.

11. Reifen (1) nach Anspruch 10, wobei der radiale Abstand Z₁₂ zunimmt, wenn der Umfangsabstand X₁₂ zunimmt.

12. Reifen (1) nach einem der Ansprüche 1 bis 11, wobei die hintere Fläche (9) jedes Stollens (3) einen Absatz (13) umfasst, der sich in Umfangsrichtung in Richtung der vorderen Fläche (10) des nächstliegenden darauffolgenden Stollens (3), von der axial äußeren Endfläche (7) axial nach innen und von der Kontaktfläche (6) radial nach innen bis höchstens zur Bodenfläche (5) erstreckt.

13. Reifen (1) nach Anspruch 12, wobei sich der Absatz (13) der hinteren Fläche (9) jedes Stollens (3) in Umfangsrichtung in Richtung der vorderen Fläche (10) des darauffolgenden Stollens (3) über einen Umfangsabstand X₁₃ von mindestens dem 0,05-fachen der mittleren Dicke E des Stollens (3) und höchstens dem 0,5-fachen der mittleren Dicke E des Stollens (3) erstreckt.

14. Reifen (1) nach einem der Ansprüche 12 oder 13, wobei sich der Absatz (11) der vorderen Fläche (10) jedes Stollens (3) von der axial äußeren Endfläche (7) über einen axialen Abstand Y₁₁ axial nach innen erstreckt, wobei sich der Absatz (13) der hinteren Fläche (9) jedes Stollens (3) von der axial äußeren Endfläche (7) über einen axialen Abstand Y₁₃, der mindestens gleich dem axialen Abstand Y₁₁ ist, über den sich der Absatz (11) der vorderen Fläche (10) des Stollens (3) axial erstreckt, axial nach innen erstreckt.

15. Reifen (1) nach einem der Ansprüche 12 bis 14, wobei sich der Absatz (13) der hinteren Fläche (9) jedes Stollens (3) von der Kontaktfläche (6) bis zur Bodenfläche (5) über einen radialen Abstand Z₁₃, der gleich der radialen Höhe H des Stollens (3) ist, radial nach innen erstreckt.

16. Reifen (1) nach einem der Ansprüche 1 bis 15, wobei der Laufstreifen aus einer ersten und einer zweiten Reihe von Stollen (3) gebildet ist, die in Bezug auf die Äquatorialebene (C) des Reifens in einem Fischgrätenmuster angeordnet sind.

17. Reifen (1) nach einem der Ansprüche 1 bis 16, wobei der mittlere Winkel A jedes Stollens (3) mindestens 20° und höchstens 70°, vorzugsweise mindestens 30° und höchstens 60°, beträgt.

## Claims

1. **-** Tyre (1) for an agricultural vehicle, comprising:
- a tread (2) comprising two rows of lugs (3) that are separated from one another by grooves (4),
- two consecutive lugs (3) in one and the same row being spaced apart, in a circumferential direction (XX'), by a circumferential distance P,
- each lug (3) extending over a radial height H in a radial direction (ZZ') from a bottom surface (5) to a contact face (6), extending over an axial width L in an axial direction (YY') from an axially inner end face (7) to an axially outer end face (8), and extending over a mean thickness E in the circumferential direction (XX') from a trailing face (9) to a leading face (10),
- each lug (3) having a mean direction (D) that passes through an axially inner end point (I) of the trailing face (9) and through an axially outer end point (J) of the trailing face (9) and forms a mean angle A with the circumferential direction (XX'),
- the leading face (10) of each lug (3) comprising a discontinuity (11) that extends circumferentially in the direction of the trailing face (9), axially inwards from the axially outer end face (8) and radially inwards from the contact face (6), **characterized in that** the discontinuity (11) on the leading face (10) of each lug (3) is continued by a recess (12) formed in the bottom surface (5).

2. - Tyre (1) according to Claim 1, **wherein** the discontinuity (11) on the leading face (10) of each lug (3) extends circumferentially in the direction of the trailing face (9) over a circumferential distance X₁₁ at least equal to 0.05 times the mean thickness E of the lug (3) and at most equal to 0.35 times the mean thickness E of the lug (3).

3. - Tyre (1) according to either of Claims 1 and 2, **wherein** the discontinuity (11) on the leading face (10) of each lug (3) extends axially inwards from the axially outer end face (7) over an axial distance Y₁₁ at least equal to 0.1 times the axial width L of the lug (3) and at most equal to 0.3 times the axial width L of the lug (3).

4. - Tyre (1) according to any one of Claims 1 to 3, **wherein** the discontinuity (11) on the leading face (10) of each lug (3) extends radially inwards from the contact face (6) over a radial distance Z₁₁ at least equal to the radial height H of the lug (3) and at most equal to 1.3 times the radial height H of the lug (3).

5. - Tyre (1) according to any one of Claims 1 to 4, the discontinuity (11) on the leading face (10) having a mean direction (D₁₁) that passes through an axially inner end point (K) of the discontinuity (11) on the leading face (10) and through the axially outer end point (M) of the discontinuity (11) on the leading face (10) and forms a mean angle A₁₁ with the circumferential direction (XX'), **wherein** the difference between the mean angle A of the lug (3) and the mean angle A₁₁ of the discontinuity (11) on the leading face (10) is at least equal to 0° and at most equal to 10°, preferably at most equal to 8°.

6. - Tyre (1) according to any one of Claims 1 to 5, **wherein** the discontinuity (11) on the leading face (10) of each lug (3) comprises a first discontinuity face (111) that extends axially outwards from the leading face (10) to a second discontinuity face (112).

7. - Tyre (1) according to Claim 6, the first discontinuity face (111) of the leading face (10) forming an angle A₁₁₁ with the mean direction (D) of the lug (3), **wherein** the angle A₁₁₁ is at least equal to 20° and at most equal to 40°.

8. - Tyre (1) according to any one of Claims 1 to 7, **wherein** the recess (12) formed in the bottom surface (5) extends circumferentially from the discontinuity (10) over a circumferential distance X₁₂ at least equal to 0.2 times the mean circumferential distance P between two consecutive lugs (3) and at most equal to the mean circumferential distance P between two consecutive lugs (3).

9. - Tyre (1) according to any one of Claims 1 to 8, the discontinuity (11) on the leading face (10) of each lug (3) extending axially inwards from the axially outer end face (7) over an axial distance Y₁₁, **wherein** the recess (12) formed in the bottom surface (5) extends axially inwards from the axially outer end face (7) over an axial distance Y₁₂ equal to the axial distance Y₁₁ over which the discontinuity (11) on the leading face (10) of the lug (3) extends axially.

10. - Tyre (1) according to any one of Claims 1 to 9, **wherein** the recess (12) formed in the bottom surface (5) extends radially inwards from the bottom surface (5) over a radial distance Z₁₂ at least equal to 0.03 times the radial height H of the lug (3) and at most equal to 0.35 times the radial height H of the lug (3).

11. - Tyre (1) according to Claim 10, **wherein** the radial distance Z₁₂ increases when the circumferential distance X₁₂ increases.

12. - Tyre (1) according to any one of Claims 1 to 11, **wherein** the trailing face (9) of each lug (3) comprises a discontinuity (13) that extends circumferentially in the direction of the leading face (10) of the closest consecutive lug (3), axially inwards from the axially outer end face (7) and radially inwards from the contact face (6) at most as far as the bottom surface (5).

13. - Tyre (1) according to Claim 12, **wherein** the discontinuity (13) on the trailing face (9) of each lug (3) extends circumferentially in the direction of the leading face (10) of the consecutive lug (3) over a circumferential distance X₁₃ at least equal to 0.05 times the mean thickness E of the lug (3) and at most equal to 0.5 times the mean thickness E of the lug (3).

14. - Tyre (1) according to either of Claims 12 and 13, the discontinuity (11) on the leading face (10) of each lug (3) extending axially inwards from the axially outer end face (7) over an axial distance Y₁₁, **wherein** the discontinuity (13) on the trailing face (9) of each lug (3) extends axially inwards from the axially outer end face (7) over an axial distance Y₁₃ at least equal to the axial distance Y₁₁ over which the discontinuity (11) on the leading face (10) of the lug (3) extends axially.

15. - Tyre (1) according to any one of Claims 12 to 14, **wherein** the discontinuity (13) on the trailing face (9) of each lug (3) extends radially inwards from the contact face (6) to the bottom surface (5) over a radial distance Z₁₃ equal to the radial height H of the lug (3).

16. - Tyre (1) according to any one of Claims 1 to 15, **wherein** the tread is made up of a first and a second row of lugs (3) disposed in chevrons with respect to the equatorial plane (C) of the tyre.

17. - Tyre (1) according to any one of Claims 1 to 16, **wherein** the mean angle A of each lug (3) is at least equal to 20° and at most equal to 70°, preferably at least equal to 30° and at most equal to 60°.
